# EUROPÄISCHE PATENTSCHRIFT

(11) **EP 2 338 392 B1**
(45) Veröffentlichungstag und Bekanntmachung des Hinweises auf die Patenterteilung: **26.02.2014**
(21) Anmeldenummer: 10196170.4
(22) Anmeldetag: 21.12.2010
(51) Int. Cl.: H01C 10/36, A47J 43/07, H01H 9/06, H01H 21/50, A47J 43/044

(54) **Küchengerät**
Kitchen appliance
Appareil de cuisine

(30) Priorität: 23.12.2009 DE 102009055296
(43) Veröffentlichungstag der Anmeldung: 29.06.2011
(73) Patentinhaber: BSH Bosch und Siemens Hausgeräte GmbH, 81739 München (DE)
(72) Erfinder: Danijel, Roman, 3312, Ljubno (SI); Golavsek, Samo, 3312, Prebold (SI); Semeja, Uros, 3327, Smartno ob Paki (SI)

(56) Entgegenhaltungen:
- DE-A1- 10 234 925
- DE-A1-102004 042 087
- DE-U1- 29 604 731
- US-B1- 6 234 663

## Beschreibung

### Hintergrund der Erfindung

Die vorliegende Erfindung betrifft ein Küchengerät, insbesondere einen Handmixer, mit einem Elektromotor zum Antreiben wenigstens eines Werkzeugs, einer Steuerplatine für den Elektromotor, welche ein Stellglied mit einem Bedienteil zum Einstellen einer Motordrehzahl aufweist und mit einem Träger zum Haltern der Steuerplatine.

### Stand der Technik

Bekanntermaßen werden beim Quirlen Nahrungsmittel wie insb. flüssige oder halbflüssige Zutaten und Gemische schaumig aufgeschlagen oder fein vermengt bzw. homogenisiert. Klümpchenbildungen, wie sie zum Beispiel beim Rühren mit einem Löffel entstehen, können dabei weitgehend vermieden werden, wobei die Konsistenz der fertigen Speise von der Art der Zutaten und der Geschwindigkeit des Quirlens sowie dessen Ausgestaltung abhängt.

Die EP 1 211 972 B1 offenbart einen Handmixer, der einen Elektromotor aufweist. Der Elektromotor treibt mindestens ein Mixerwerkzeug mit unterschiedlichen Drehzahlen an. Zum Steuern der Drehzahlwerte weist der Handmixer ein Drehzahlschaltmittel auf, das mit Hilfe einer Schalthandhabe bedienbar ist. Das Drehzahlschaltmittel ist als bogenförmiger Schiebeteil ausgeführt, welches am Gehäuse des Handmixers entlang gleitet. Um die Bewegung des Schiebeteils an die Elektronik weiterzugeben, weist der Handmixer einen Stößel auf, der einerseits das Schiebeteil kontaktiert und auf der anderen Seite mit der Elektronik zur Steuerung der Drehzahl zusammenwirkt. Diese Konstruktion hat sich als unflexibel und kompliziert erwiesen, da beim Testen der Elektronik das Gerät vollständig montiert werden muss. Falls nun Fehler detektiert wurden, muss das Gerät aufwendig demontiert werden, bevor es einem neuen Testlauf unterzogen werden kann.

Weitere bekannte, dem Stand der Technik entsprechende Küchengeräte mit Elektromotor und Steuerplatine sind zum Beispiel in der DE 10 2004 042 087 A1 und US 6,234,663 B1 offenbart.

### Der Erfindung zugrundeliegende Aufgabe

Der Erfindung liegt die Aufgabe zugrunde, ein gegenüber dem Stand der Technik verbessertes Küchengerät bereitzustellen, welches leicht montierbar ist und insbesondere zu Testzwecken einfach in Betrieb genommen werden kann.

### Erfindungsgemäße Lösung

Die Lösung der gestellten Aufgabe gelingt durch ein Küchengerät mit den Merkmalen des Anspruchs 1. Das erfindungsgemäße Küchengerät baut auf gattungsbildende Küchengeräte dadurch auf, dass das Bedienteil des Stellglieds mit dem Träger dergestalt miteinander und/oder mit der Steuerplatine vormontierbar ausgebildet sind, dass bereits im vormontierten Zustand diese in einer testbaren Funktionsverbindung zueinander stehen. Das Bedienteil kann somit in Funktionsverbindung mit dem Träger gebracht werden, so dass mechanische und/oder, wenn die vormontierte Montageeinheit auch die Steuerplatine umfasst, elektronische Tests während der Vormontage durchgeführt werden können. Dies hat den Vorteil, dass die Funktionalität der Steuerplatine und insbesondere des Bedienteils vor der endgültigen Montage getestet werden kann. Nachdem die Montageeinheit, die vorzugsweise durch Bedienteil, Träger und Steuerplatine im Wesentlichen gebildet wird, vollständig getestet wurde, kann diese in einem eigenen Gehäuse oder dem des Küchengeräts montiert werden, so dass nachträgliche Demontagearbeiten bei fehlerhaften Bauteilen, die ersetzt werden müssen, entfallen. Der Träger der Steuerplatine kann somit zwei Funktionen übernehmen, nämlich einerseits die Halterung der Steuerplatine und andererseits die Bereitstellung einer testbaren Funktionsverbindung zum Bedienteil, so dass auch außerhalb eines eigenen Gehäuses bzw. das Gehäuse des Küchengeräts Funktionstests durchgeführt werden können, was zu einer verbesserten Produktionsqualität durch Vermeidung von Ausfallgeräten führt. Dies ist insbesondere bei Handrührgeräten bzw. Handmixern vorteilhaft, falls das Bedienteil im Griff des Gerätes eingebaut wird, wo üblicherweise die Steuerplatine aus Raum- bzw. Platzmangel schlecht handhabbar ist.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Es ist bevorzugt, dass die Steuerplatine, das Bedienteil und der Träger als Montageeinheit ausgeführt sind, welche insbesondere in einem Gehäuse, vorzugsweise in einem als Griff ausgebildetes Gehäuseteil, des Küchengeräts montierbar ist. Die Montageeinheit kann einfach außerhalb des Gehäuses getestet werden und nachdem alle mechanischen und/oder elektronischen bzw. elektrischen Funktionstests durchgeführt wurden, kann sie in einem vereinfachten Montageschritt des Küchengeräts in das Gehäuse eingesetzt werden.

Es ist bevorzugt, dass von Bedienteil oder Träger das eine ein Rastmittel und das andere ein Gegenrastmittel aufweist oder umgekehrt, welche dergestalt zusammenwirken, dass mindestens eine Betriebsposition entsprechend einer Motordrehzahl einstellbar ist. Das Rast- und Gegenrastmittel gewährleisten eine genaue Bedienung des Stellgliedes mittels des Bedienteils und ferner kann einem Benutzer des Küchengeräts eine taktile und/oder hörbare Rückmeldung bereitgestellt werden.

Erfindungsgemäß bevorzugt sind das Rastmittel und das Gegenrastmittel dergestalt zueinander angeordnet, dass während einer Benutzung eine gut hörbare und/oder taktile Rückmeldung an einen Bediener erhältlich ist. Dies kann insb. dadurch realisiert sein, dass von Rastmittel und Gegenrastmittel das eine wenigstens in einem Abschnitt, insbesondere im Abschnitte ihres Zusammenwirkens, elastisch ausgebildet ist oder umgekehrt. Insbesondere ist bevorzugt, wenn das Rastmittel einen Körper, insbesondere eine Kugel, aufweist, der mit einer elastischen in einer Führung angeordneten Feder zusammenwirkt, dergestalt, dass die Feder den Körper auf das Gegenrastmittel andrückt. Der Körper des Rastmittels wirkt mit dem Gegenrastmittel zusammen, so dass das Stellglied in einer entsprechenden Betriebsposition sicher fixiert werden kann. Falls der Körper als Kugel, insbesondere als Metallkugel, ausgeführt ist, kann diese entlang eines beispielsweise geriffelten Gegenrastmittel angedrückt werden. So erhält ein Benutzer eine gleichermaßen gute handhabbare (taktile) wie hörbare Rückmeldung beim Bedienen des Bedienteils.

Erfindungsgemäß bevorzugt umfasst der Träger mindestens eine Lagerstelle, die mindestens einen Montagebereich des Bedienteils drehbar aufnimmt. Die Lagerstellen sichern das Bedienteil in einer Funktionsverbindung am Träger, so dass mechanische und/oder elektrische Funktionstests im vormontierten Zustand des Küchengeräts vorgenommen werden können.

Zweckmäßigerweise weist das Bedienteil einen Schaft zum Verstellen des Stellglieds auf. Der Schaft entspricht der Rotationsachse bzw. Schwenkachse des Bedienteils und überträgt die Bewegung des Bedienteils, welches als Stellrad wirken kann, auf das Stellglied. Die unterschiedlichen Winkelstellungen des Bedienteils werden somit mit Hilfe des Schaftes auf das Stellglied übertragen, so dass unterschiedliche Betriebspositionen des Elektromotors einstellbar sind. Die unterschiedlichen Positionen entsprechen unterschiedlichen Drehzahlen, wobei eine Position der Nullstellung entsprechen kann, in welcher der Motor ausgeschaltet ist.

Vorteilhafterweise weist der Schaft einen Lagerzapfen auf, der von der wenigstens einen Lagerstelle des Trägers aufnehmbar ist. Durch das Zusammenwirken des Lagerzapfens mit der Lagerstelle am Träger kann der Schaft des Bedienteils in seiner Position fixiert werden. Durch diese Lagerung werden Stöße auf den Schaft, die während der Montage entstehen können, direkt in den Träger umgeleitet, so dass das Stellglied nicht beschädigt werden kann. Ferner sichert diese Verbindung eine genaue Drehbewegung des Schaftes, was wiederum ein genaues Steuern des als Drehpotentiometer ausgebildeten Stellglieds erlaubt.

Der Träger weist wenigstens ein Einrastmittel auf, das die Steuerplatine haltert. Das Einrastmittel sichert die Steuerplatine am Träger und kann so ausgeführt werden, dass die Steuerplatine zerstörungsfrei ausgebaut und wieder einmontiert werden kann. Nachdem die Steuerplatine in das Einrastungsmittel befestigt ist und das Bedienteil mit dem Träger verbunden ist, kann ein Monteur die Montageeinheit als Modul in das Küchengerät einbauen bzw. unterschiedlichsten Funktionstests unterziehen.

Das Stellglied ist vorteilhaft als Drehpotentiometer ausgeführt. Mittels des Drehpotentiometers wird ein kostengünstiges Bauteil als Stellglied eingesetzt, mit welchem eine genaue Einstellung der Drehzahl des Elektromotors der Küchenmaschine bereitstellbar ist.

Neben dem Stellglied kann die Steuerplatine weitere elektronische Bauteile umfassen, welche für den Betrieb des Küchengeräts notwendig sind. Somit kann ein vielfältig einsetzbares Einbaumodul für das Küchengerät bereitgestellt werden.

Die vorliegende Erfindung eignet sich insbesondere für Küchengeräte mit zwei Rührvorrichtungen, welche in entgegen gesetzte Richtungen durch einen elektrischen Motor angetrieben werden. Es ist jedoch ebenfalls denkbar, dass die vorliegende Erfindung bei einem Handgerät, insbesondere bei einem Stabmixer oder einer Küchenmaschine Verwendung findet. Im Falle eines Handrührgeräts kann die Montageeinheit im Griff des Gerätes eingebaut werden, so dass ein Benutzer des Handrührgeräts einfach das Bedienteil beispielsweise mit dem Daumen erreichen kann.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen:
- Fig. 1: eine in einem Träger eingesetzte Steuerplatine als Montageeinheit gemäß der vorliegenden Erfindung;
- Fig. 2: ein Bedienteil für ein Stellglied nach der Erfindung; und schließlich
- Fig. 3: ein Träger für die Steuerplatine nach der Erfindung;

### Ausführliche Beschreibung der Figuren

Bei der nachfolgenden Beschreibung bevorzugter Ausgestaltungen der vorliegenden Erfindung bezeichnen gleiche Bezugszeichen gleiche oder vergleichbare Komponenten.

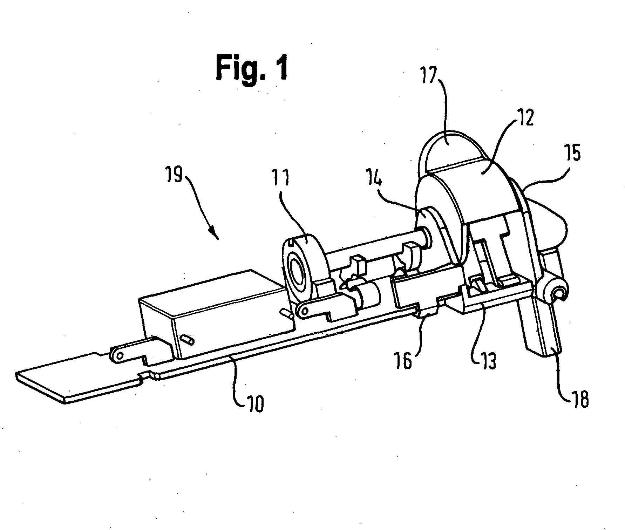

Fig. 1 zeigt eine in einem Träger eingesetzte Steuerplatine mit einem Bedienteil für das Stellglied gemäß der vorliegenden Erfindung. Die Steuerplatine 10 wird von einem Träger 13 gehaltert, der wiederum in einer Funktionsverbindung mit dem Bedienteil 12 des Stellglieds 11 steht. Das Stellglied 11 kann ein Drehpotentiometer sein, der zum Einstellen einer Motordrehzahl eines Küchengeräts verwendbar ist. Dies Steuerplatine 10, das Bedienteil 12 und der Träger 13 können als Montageeinheit 19 ausgeführt sein, welche leicht während der Endmontage des Küchengeräts (nicht gezeigt) in das Gehäuse montierbar ist. Das Küchengerät weist einen Elektromotor auf, der neben anderen Funktionsbauteilen in einem Gehäuse montiert wird. Der Elektromotor wird mit Hilfe der Steuerplatine 10 gesteuert und er treibt wiederum Werkzeuge des Küchengeräts an. Diese Werkzeuge werden üblicherweise mit unterschiedlichen Drehzahlen angetrieben, die durch einen Benutzer mittels des Bedienteils 12 auswählbar sind. Die unterschiedlichen Drehzahlen des Motors entsprechen unterschiedlichen Betriebspositionen des Bedienteils 12. Über das Stellglied 11 werden die entsprechenden Betriebspositionen bei der Steuerung des Elektromotors eingestellt.

Die Steuerplatine 10 kann als Leiterplatte ausgebildet sein, auf welcher unterschiedliche elektronische Bauteile verlötet sind. Die Bauteile werden mittels Leiterbahnen elektrisch miteinander Verbunden. Zur Steuerung der Drehzahl eines Elektromotors weist die Steuerplatine 10 einen Drehpotentiometer 11 auf, welches als Stellglied 11 bzw. Regelungseinrichtung dient. Der Elektromotor, welcher aus Gründen der Übersichtlichkeit nicht gezeigt ist, wird beispielsweise mit Hilfe geeigneter Kontaktstellen mit der Steuerplatine 10 verbunden, so dass eine elektrische Verbindung bereitgestellt werden kann. Durch diese elektrische Verbindung kann der Motor des Küchengeräts gesteuert werden.

Als Handhabe weist das Küchengerät ein Bedienteil 12 auf, welches von einem Benutzer bedient werden kann. Das Bedienteil 12 weist einen Bedienbereich 17 auf, der einen bogenförmigen Aufbau nach Art einer Lasche aufweist. Mit Hilfe des Bedienbereichs 17 kann ein Benutzer des Küchengeräts die Drehzahl des Elektromotors entsprechend einstellen. Das Drehpotentiometer 11, das mit dem Bedienteil 12 wirk- bzw. funktionsverbunden ist, steuert entsprechend den Elektromotor. Das Bedienteil 12 steht in einer Funktionsverbindung mit dem Träger 13, so dass zum Testen des Küchengeräts das Zusammenwirken zwischen Bedienteil 12 und Träger 13 notwendig ist. Da die Montageeinheit 19 bereits im vormontierten Zustand voll funktionsfähig ist, kann das testen ohne vollständiger Montage in das Gehäuse des Küchengeräts durchgeführt werden. Das Testen kann mechanisch und/oder elektrisch erfolgen. Mechanisch bedeutet, dass beispielsweise die Handhabe des Bedienteils bzw. das Zusammenwirken mit dem Träger 13 getestet werden kann und elektrisch bzw. elektronisch, dass beispielsweise die elektronische Steuerung des Motors, welche auf der Steuerplatine 10 verlötet ist, getestet werden kann. Dies kann außerhalb des Gehäuses des Küchengeräts durchgeführt werden, welches im Produktionsverfahren sich als sehr vorteilhaft erwiesen hat. Zur Montage bzw. Endmontage in das Gehäuse des Küchengeräts weist der Träger 13 einen Befestigungsbereich 18 auf, welcher beispielsweise aufsteckbar ausgebildet ist. Somit kann die gesamte Montageeinheit 19 in das Gehäuse in einem Produktionsschritt endmontiert werden. Der Befestigungsbereich 18 des Trägers 13 kann beispielsweise einstückig mit dem Träger 13 ausgebildet sein, es ist jedoch denkbar, dass dieser Bereich nachträglich an den Träger 13 angebracht werden kann.

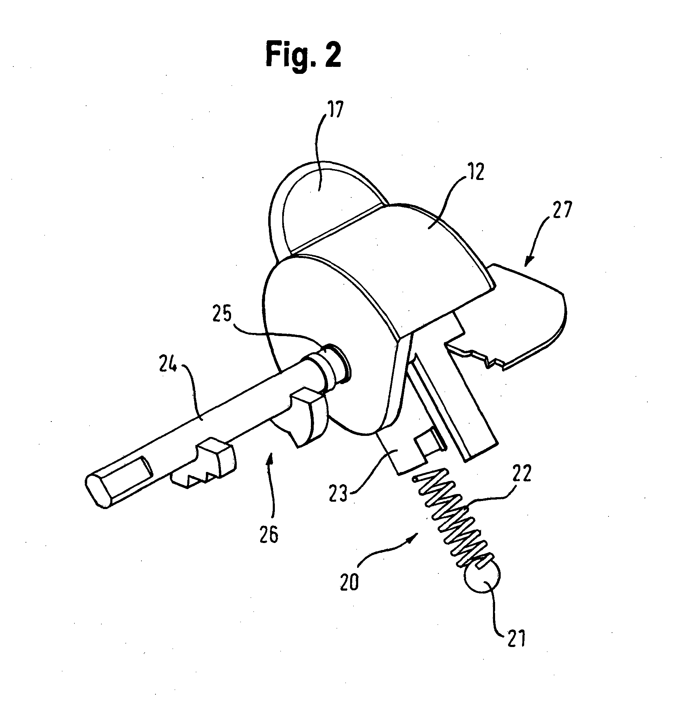

In der Fig. 2 ist der Aufbau des Bedienteils in einer Detailansicht dargestellt. Das Bedienteil 12 kann aus Kunststoff in einem Spritzgussverfahren hergestellt werden, jedoch auch eine Ausführung aus einer metallischen Legierung ist realisierbar. Das Bedienteil 12 wird schwenkbar um eine Achse auf dem Träger 13 gelagert. Die Achse verläuft entlang eines Schaftes 24, der mit dem Stellglied 11 zusammenwirkt. Somit können die Bewegungen des Bedienteils 12 auf das Stellglied 11 übertragen werden. Eine Schwenk- bzw. Drehbewegung des Bedienteils 12 entspricht folglich einer Widerstandänderung des Drehpotentiometers 11, welches wiederum einer entsprechenden Drehzahl des Elektromotors des Küchengeräts entspricht.

Das Bedienteil 12 weist gemäß einer Ausführungsform zwei Montagebereiche 26, 27 auf welche mit entsprechenden Lagerstellen 14, 15 am Träger zusammenwirken. Das Bedienteil 12 wird am ersten und zweiten Montagebereich 25, 26 mit den ersten bzw. zweiten Lagerstelle 14, 15 verbunden, so dass das Bedienteil fest fixiert ist. Diese Fixierung gewährleistet die Funktionsverbindung zwischen Träger 13 und Bedienteil 12. Die erste und zweite Lagerstelle 14, 15 des Trägers 13 ragen armförmig aus der Ebene des Trägers heraus. Die erste Lagerstelle 14 wirkt mit einem Lagerzapfen 25 am Schaft 24 zusammen, so dass das Bedienteil im ersten Montagebereich 26 fixiert ist. Im zweiten Montagebereich 27 wirkt das Bedienteil 12 mit einer zweiten Lagerstelle 15 zusammen. Beide Lagerstellen 14 bzw. 15 sind dergestalt ausgebildet, dass das Bedienteil 12 schwenken bzw. rotieren kann, um somit das Drehpotentiometer 11 steuern zu können.

Das Bedienteil ist ferner mit einer Führung 23 für eine Feder 22 versehen, die mit einer Kugel 21 in einer Wirkverbindung steht. Die Führung 23 kann hohlzylindrisch ausgebildet sein, so dass die Feder 22 aufgenommen werden kann. Durch die hohlzylindrische Form kann die Feder dementsprechend gegenüber seitlichen Verformungen gesichert werden. Die Kugel 21 wirkt als Rastmittel für das Bedienteil 12 indem es in einer gewünschten Position verrastet. Die Position entspricht einer Winkelstellung des als Stellrad ausgebildeten Bedienteils 12, das wiederum einer bestimmten Drehzahl des Elektromotors entspricht. Die Feder 22 drückt die Kugel 21 auf ein Gegenrastmittel 30, welches am Träger 13 ausgebildet ist. Es ist denkbar, dass der Aufbau komplementär ist; d.h. das Gegenrastmittel ist als Teil des Bedienteils 12 ausgebildet, und das Rastmittel 20 ist geeignet am Bedienteil angeordnet. Der Träger 13 weist aber gemäß beiden Ausführungsformen eine testbare Funktionsverbindung mit dem Bedienteil 12 auf. Die Feder 22 drückt die Kugel 21 auf das Gegenrastmittel 30 an. Die Feder 22 stellt ferner auch eine Rückmeldung für einen Benutzer des Küchengeräts bereit, da dieser die Rückmeldung akustisch und/oder taktil am Bedienteil 12 wahrnehmen kann.

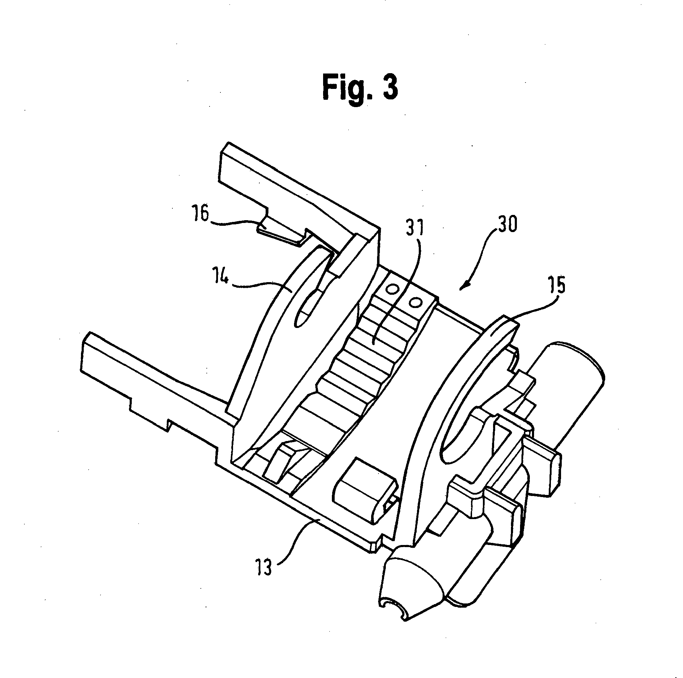

Fig. 3 zeigt den Träger der Steuerplatine gemäß der vorliegenden Erfindung. Der Träger 13 weist mindestens ein Einrastmittel 16, welches dergestalt ausgebildet ist, dass die Steuerplatine 10 am Träger 13 befestigt werden kann. Das Gegenrastmittel 30 ist gemäß einer möglichen Ausführungsform am Träger 13 ausgebildet und weist einen stufenförmigen bzw. geriffelten Verlauf auf. Das Gegenrastmittel 30 weist in diesem Ausführungsbeispiel einen kreisbogenförmigen Verlauf auf, entlang welcher der Körper (Kugel) 21 von der Feder 22 angedrückt werden kann. Jede der dargestellten Stufen 31 entspricht einer bestimmten Drehzahl des Motors und sie sind dergestalt, dass die Kugel 21 mittels der Feder 22 auf die entsprechende Stufe angedrückt und gehaltert werden kann. Um eine neue Betriebsposition einzustellen, muss ein Benutzer das Bedienteil 12 betätigen, um die Kugel 21 auf eine neue Stufe 31 zu setzen. Somit kann eine testbare Funktionsverbindung zwischen Bedienteil 12 und Träger 13 sichergestellt werden. Die Lagerstellen 14 und 15 sind armförmig ausgebildet und ragen aus der Fläche des Trägers 13 heraus. Beide Lagerstellen umgreifen einerseits den Schaft 24 des Bedienteils 12 und am anderen Ende wird der Montageberteich 15 ebenfalls schwenkbar bzw. drehbar fixiert.

Durch die Funktionsverbindung des Bedienteils mit dem Träger kann erfindungsgemäß bereits im vormontierten Zustand des Küchengeräts ein Funktionstest durchgeführt werden, ohne dass ein vollständiger Zusammenbau erfolgen muss. Somit kann die Produktionszeit verkürzt werden, welches wiederum zu einer kosteneffektive Herstellung eines Küchengeräts führen kann.

### BEZUGSZEICHENLISTE

- 10: Steuerplatine
- 11: Stellglied
- 12: Bedienteil
- 13: Träger
- 14: erste Lagerstelle
- 15: zweite Lagerstelle
- 16: Einrastmittel
- 17: Bedienbereich
- 18: Befestigungsbereich
- 19: Montageeinheit
- 20: Rastmittel
- 21: Körper
- 22: Feder
- 23: Führung
- 24: Schaft
- 25: Lagerzapfen
- 26: erster Montagebereich
- 27: zweiter Montagebereich
- 30: Gegenrastmittel

## Patentansprüche

1. Küchengerät, insbesondere Handmixer, mit
- einem Elektromotor zum Antreiben wenigstens eines Werkzeugs;
- einer Steuerplatine (10) für den Elektromotor, welche ein Stellglied (11) mit einem Bedienteil (12) zum Einstellen einer Motordrehzahl aufweist; und mit
- einem Träger (13) zum Haltern der Steuerplatine (10);
wobei das Bedienteil (12) des Stellglieds (11) und der Träger (13) dergestalt mitei-nander oder mit der Steuerplatine (10) vormontierbar ausgebildet sind, dass bereits im vormontierten Zustand diese in einer testbaren Funktionsverbindung zueinander stehen können, wobei die Steuerplatine (10), das Bedienteil (12) und der Träger als Montageeinheit (19) ausgeführt sind, welche insbesondere in einem Gehäuse, vorzugsweise in einem als Griff ausgebildetes Gehäuseteil des Küchengeräts, montierbar ist, wobei von Bedienteil (12) und Träger (13) das eine ein Rastmittel (20) und das andere ein Gegenrastmittel (30) aufweist oder umgekehrt, welche dergestalt zusammenwirken, dass mindestens eine Betriebsposition entsprechend einer Motordrehzahl einstellbar ist, **dadurch gekennzeichnet dass** das Rastmittel (20) einen Körper (21), insbesondere eine Kugel (21), aufweist der mit einer elastischen in einer Führung (23) angeordneten Feder (22) zusammenwirkt, dergestalt, dass die Feder (22) den Körper (21) auf das Gegenrastmittel (30) andrückt.

2. Küchengerät nach Anspruch 1, **dadurch gekennzeichnet, dass** Rastmittel (20) und Gegenrastmittel (30) dergestalt zueinander angeordnet sind, dass während einer Benutzung eine gut hörbare und/oder taktile Rückmeldung an einen Bediener erhältlich ist.

3. Küchengerät nach einem der vorhergehenden Ansprüche, **dadurch gekennzeichnet, dass** der Träger (13) mindestens eine Lagerstelle (14, 15) aufweist, die mindestens einen Montagebereich (26, 27) des Bedienteils (12) drehbar aufnimmt.

4. Küchengerät nach einem der vorhergehenden Ansprüche, **dadurch gekennzeichnet, dass** das Bedienteil (12) einen Schaft (24) zum Verstellen des Stellglieds (11) umfasst, welcher insbesondere einen Lagerzapfen (25) aufweist, der von der wenigstens einen Lagerstelle (15) des Trägers (13) aufnehmbar ist.

5. Küchengerät nach einem der vorhergehenden Ansprüche, **dadurch gekennzeichnet, dass** der Träger (13) wenigstens ein Einrastmittel (16) aufweist, das die Steuerplatine (10) haltert.

6. Küchengerät nach einem der vorhergehenden Ansprüche, **dadurch gekennzeichnet, dass** das Stellglied (11) ein Drehpotentiometer ist.

7. Küchengerät nach einem der vorhergehenden Ansprüche, **dadurch gekennzeichnet, dass** die Steuerplatine (10) eine Vielzahl an elektronischen Bauteilen aufweist.

## Claims

1. Kitchen appliance, in particular hand mixer, having
- an electric motor for driving at least one tool;
- a control board (10) for the electric motor, which has a control element (11) with an operating part (12) for setting a motor speed; and having
- a support (13) for holding the control board (10);
wherein the operating part (12) of the control element (11) and the support (13) are configured in such a manner that they can be preassembled with one another or with the control board (10) such that in the preassembled state they can already be functionally connected to one another in a testable manner, the control board (10), operating part (12) and support being embodied as an assembly unit (19), which can be assembled in particular in a housing, preferably in a housing part of the kitchen appliance configured as a handle, wherein one of the operating part (12) and support (13) has a locking means (20) and the other a counter locking means (30) or vice versa, these interacting in such a manner that at least one operating position can be set according to a motor speed, **characterised in that** the locking means (20) has a body (21), in particular a sphere (21), which interacts with an elastic spring (22) disposed in a guide (23) such that the spring (22) presses the body (21) onto the counter locking means (30).

2. Kitchen appliance according to claim 1, **characterised in that** locking means (20) and counter locking means (30) are disposed in relation to one another in such a manner that during use readily audible and/or tactile feedback is provided for an operator.

3. Kitchen appliance according to one of the preceding claims, **characterised in that** the support (13) has at least one bearing point (14, 15), which receives at least one assembly region (26, 27) of the operating part (12) in a rotatable manner.

4. Kitchen appliance according to one of the preceding claims, **characterised in that** the operating part (12) comprises a stem (24) for displacing the control element (11), which in particular has a bearing pin (25), which can be received by the at least one bearing point (15) of the support (13).

5. Kitchen appliance according to one of the preceding claims, **characterised in that** the support (13) has at least one latching means (16), which holds the control board (10).

6. Kitchen appliance according to one of the preceding claims, **characterised in that** the control element (11) is a rotary potentiometer.

7. Kitchen appliance according to one of the preceding claims, **characterised in that** the control board (10) has a plurality of electronic components.

## Revendications

1. Appareil de cuisine, notamment mixer, comprenant
- un moteur électrique destiné à entraîner au moins un outil ;
- une platine de commande (10) pour le moteur électrique, laquelle présente un organe de réglage (11) muni d'une pièce de commande (12) pour régler une vitesse de rotation du moteur ; et comprenant
- un support (13) pour maintenir la platine de commande (10) ;
la pièce de commande (12) de l'organe de réglage (11) et le support (13) étant réalisés de manière à pouvoir être pré-montés mutuellement ou avec la platine de commande (10) de telle façon que ceux-ci, à l'état déjà pré-monté, puissent être en relation mutuelle dans une liaison de fonction pouvant être testée, la platine de commande (10), la pièce de commande (12) et le support étant réalisés comme unité de montage (19) laquelle peut être montée notamment dans un boîtier, de préférence dans une partie de boîtier de l'appareil de cuisine réalisée comme poignée, la pièce de commande (12) étant un moyen d'enclenchement (20) et le support (13) présentant un moyen de contre-enclenchement (30) ou inversement, lesquels coopèrent de manière à ce qu'au moins une position de fonctionnement correspondant à une vitesse de rotation du moteur soit réglable, **caractérisé en ce que** le moyen d'enclenchement (20) présente un corps (21), notamment une bille (21), qui coopère avec un ressort élastique (22) disposé dans un guidage (23) de telle manière que le ressort (22) presse le corps (21) sur le moyen de contre-enclenchement (30).

2. Appareil de cuisine selon la revendication 1, **caractérisé en ce que** le moyen d'enclenchement (20) et le moyen de contre-enclenchement (30) sont disposés de telle manière l'un par rapport à l'autre que pendant une utilisation une information en retour bien audible et/ou tactile à un utilisateur peut être reçue.

3. Appareil de cuisine selon l'une quelconque des revendications précédentes, **caractérisé en ce que** le support (13) présente au moins un palier (14, 15) qui loge de manière rotative au moins une zone de montage (26, 27) de la pièce de commande (12).

4. Appareil de cuisine selon l'une quelconque des revendications précédentes, **caractérisé en ce que** la pièce de commande (12) comprend une tige (24) pour régler l'organe de réglage (11), laquelle tige présente notamment un tourillon (25) qui peut être logé par l'au moins un palier (15) du support (13).

5. Appareil de cuisine selon l'une quelconque des revendications précédentes, **caractérisé en ce que** le support (13) présente au moins un moyen d'enclenchement (16) qui maintient la platine de commande (10).

6. Appareil de cuisine selon l'une quelconque des revendications précédentes, **caractérisé en ce que** l'organe de réglage (11) est un potentiomètre rotatif.

7. Appareil de cuisine selon l'une quelconque des revendications précédentes, **caractérisé en ce que** la platine de commande (10) présente une multitude de composants électroniques.
